# EUROPEAN PATENT SPECIFICATION

(11) **EP 1 563 598 B1**
(45) Date of publication and mention of the grant of the patent: **03.10.2012**
(21) Application number: 02772091.1
(22) Date of filing: 01.11.2002
(51) Int. Cl.: H02P 9/00, H02P 9/42, F03D 9/00

(54) **CIRCUIT ARRANGEMENT FOR USE IN A VARIABLE SPEED WIND TURBINE SYSTEM COMPRISING A DOUBLE-FED INDUCTION GENERATOR AND A BACK-TO-BACK CONVERTER**
SCHALTUNGSANORDNUNG ZUR VERWENDUNG IN EINEM REGELWINDTURBINENSYSTEM MIT DOPPELTGESPEISTEM INDUKTIONSGENERATOR UND RÜCKWANDLER
CIRCUIT AGENCE POUR SYSTEME D'EOLIENNE A VITESSE VARIABLE COMPRENANT UN GENERATEUR A INDUCTION A DOUBLE ALIMENTATION ET UN CONVERTISSEUR REVERSIBLE

(43) Date of publication of application: 17.08.2005
(73) Proprietor: Vestas Wind Systems A/S, 8200 Aarhus N (DK)
(72) Inventor: NIELSEN, John, Godsk, 8543 Hornslet (DK)
(74) Representative: Inspicos A/S
(86) International application number: PCT/DK2002/000729
(87) International publication number: WO 2004/040748

(56) References cited:
- WO-A-01/91279
- US-A- 5 028 804
- US-A- 5 225 712
- ZHANG L ET AL: "Application of a matrix converter for the power control of a variable-speed wind-turbine driving a doubly-fed induction generator" PROCEEDINGS OF THE IECON'97 23RD INTERNATIONAL CONFERENCE ON INDUSTRIAL ELECTRONICS, CONTROL, AND INSTRUMENTATION (CAT. NO.97CH36066), PROCEEDINGS OF THE IECON '97. 23RD INTERNATIONAL CONFERENCE ON INDUSTRIAL ELECTRONICS, CONTROL, AND INSTRUMENTATION, pages 906-911 vol.2, XP002244735 1997, New York, NY, USA, IEEE, USA ISBN: 0-7803-3932-0
- HELLE L ET AL: "Comparison of converter efficiency in large variable speed wind turbines" APEC 2001. SIXTEENTH ANNUAL IEEE APPLIED POWER ELECTRONICS CONFERENCE AND EXPOSITION (CAT. NO.01CH37181), PROCEEDINGS OF 16TH ANNUAL APPLIED POWER ELECTRONICS CONFERENCE - APEC 2001, ANAHEIM, CA, USA, 4-8 MARCH 2001, pages 628-634 vol.1, XP002244736 2001, Piscataway, NJ, USA, IEEE, USA ISBN: 0-7803-6618-2
- BHOWMIK S ET AL: "Performance optimization for doubly fed wind power generation systems" IEEE TRANSACTIONS ON INDUSTRY APPLICATIONS, JULY-AUG. 1999, IEEE, USA, vol. 35, no. 4, pages 949-958, XP002244737 ISSN: 0093-9994

## Description

### FIELD OF THE INVENTION

The present invention relates to a circuit arrangement for use in a variable speed wind turbine system comprising a double-fed induction generator and a back-to-back converter of the kind set forth in the preamble of claim 1, a method of controlling such a circuit arrangement, and a control system for a wind turbine comprising such a circuit arrangement.

### BACKGROUND ART

In wind turbine systems with variable rotational speed, it is known to use a back-to-back converter for transferring electrical energy between the rotor of the double-fed induction generator and the grid. The back-to-back converter comprises a rotor-connected converter (in the following rotor converter), an intermediate DC-circuit (in the following DC-link) and a grid-connected converter (in the following grid converter). The back-to-back converter can be controlled in such a way that the stator windings of the generator can be connected directly to the grid due to the fact that the currents in the rotor windings are controlled in such a way that the frequency of the stator windings corresponds to the grid frequency. Furthermore, the current in the rotor windings are controlled in such a way that desired values of active and reactive power delivered by the generator can be obtained. Such wind turbine systems are e.g. known from US-5,083,039.

In connection with voltage drops on the grid, the generator is demagnetized, and when the voltage returns the generator is remagnetized. During remagnetization, the generator consumes a large amount of reactive power. During demagnetization and remagnetization, the generator will overload the back-to-back converter providing an uncontrolled increase in the voltage on the DC-circuit. Due to the fact that the voltage on the grid is low, the grid converter cannot deliver active power to the grid.

The normal procedure during voltage drops on the grid has been to disconnect the generator from the grid and short-circuit the generator rotor windings using a controlled rectifier bridge connected across the rotor windings. Reconnection of the wind turbine after re-establishment of the grid voltage would normally be performed without the wind turbine taking active part in the re-establishment of the grid voltage.

WO 01/91279 A discloses a grid-connected variable speed wind turbine system and a method for controlling a variable speed wind turbine system, the system comprising a double-fed generator connected on the stator side to the grid and on the rotor side to a back-to-back converter connected for transferring energy between the rotor of the double-fed induction generator and the grid, and a controlled bypass switch acting directly on the rotor windings.

### DISCLOSURE OF THE INVENTION

It is the object of the present invention to provide a circuit arrangement for use in a variable speed wind turbine system comprising a double-fed induction generator and a back-to-back converter connected for transferring energy between the rotor of the double-fed induction generator and the grid, with which it is possible to keep the stator windings of the generator connected to the grid during grid faults, such as low grid voltage or short circuits on the grid, and this object is achieved with a circuit arrangement of said kind, which according to the present invention also comprises the features set forth in the characterising clause of claim 1. With this arrangement, the wind turbine generator can actively take part in the re-establishment of the grid voltage and the generator can contribute to the short-circuit current during the fault conditions. Furthermore, it is possible to control the active and reactive power contribution from the generator during fault conditions and re-establishment of the grid voltage. During the fault conditions, the controlling of the currents of the rotor provides the possibility of reducing speed oscillations and avoiding over-speed conditions for the wind turbine, due to the fact that active power from the wind turbine can be dissipated in the impedances during low grid voltage conditions. During a fast recovery of the grid voltage the controlled switches in the rotor converter can temporarily be turned off. Thereby the freewheeling diodes transfer power to the DC-link, when the rotor voltages are higher than the DC-link voltage.

This objet is also achieved by a method of controlling a grid connected variable speed wind turbine system comprising the features of the characterising part of claim 11.

This provides a soft and fast re-establishment of the power production and lead to low stresses on the wind turbine and the grid.

In order to reduce the power dissipation during normal operation, the coupling means for connecting the resistance and disconnecting the power-switching element from the grid comprises contactors, but in such cases where the connections and disconnections have to be made in a speedy way, the coupling means may comprise power-electronic switches, which will however introduce additional losses during normal operation.

### BRIEF DESCRIPTION OF THE DRAWINGS

In the following detailed part of the present description, the invention will be explained in more detail with reference to the exemplary embodiments of a circuit arrangement in accordance with the invention shown in the drawings, in which
Figure 1 shows a circuit arrangement in accordance with the present invention,
Figure 2 shows an alternative circuit arrangement in accordance with the present invention,
Figure 3 shows a different connection possibility for the impedances for dissipating the power transferred from the DC-link, and
Figure 4 shows a more complete schematic diagram of the control system for a wind turbine in which the circuit arrangement in accordance with the present invention is implemented.

### DESCRIPTION OF THE PREFERRED EMBODIMENTS

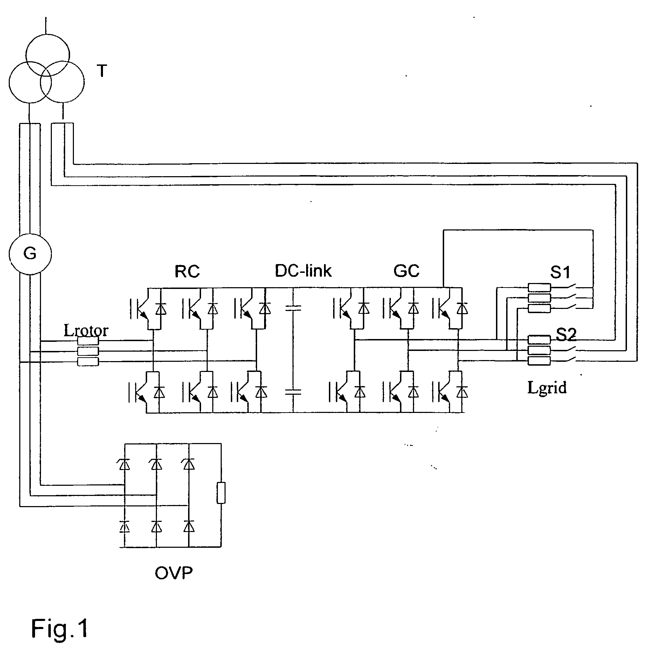

The circuit arrangement shown in Figure 1 comprises a double-fed induction generator G. The stator windings of the double-fed induction generator G are directly connected to the grid, as indicated by the transformer connection T. It is naturally possible, if not even necessary, to have appropriate protection devices in the connection between the stator of the double-fed induction generator G and the grid, but in connection with the present invention and the following description thereof, such protection devices are of minor importance.

The rotor windings of the double-fed induction generator G are connected to a back-to-back converter comprising a rotor converter RC, a DC-link and a grid converter GC, said grid converter GC being connected to the grid, as indicated by the transformer connection T.

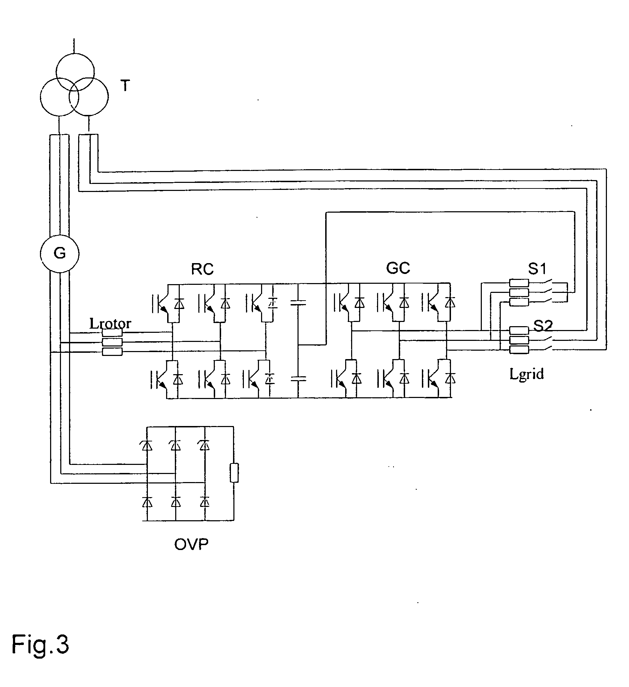

As is well known within this technique, each of the converters comprises six power switching elements connected in a bridge configuration and connected to the DC-link in order to provide the possibility of controlling the currents i in the rotor windings in such a way, that desired values of active and reactive power P,Q delivered by the generator stator windings can be obtained. Furthermore, each of the power switching elements are associated with a free-wheeling diode, as well known in this technique. Figure 1 shows rotor inductances Lᵣₒₜₒᵣ connected between the rotor converter and the rotor terminals on the generator G and corresponding grid inductances L_{grid} connected between the grid converter GC and the grid. In accordance with the present invention a switch S2 is provided to enable a disconnection of at least one of the phases of the grid from the grid converter GC, and a corresponding switch S1 is provided, enabling the connection of an impedance between the power switching elements of the grid converter GC, which are thus disconnected from the grid and the DC-link. In this way the power switching elements of the grid converter GC are able to provide a controlled dissipation of power from the DC-link to the impedance connected by means of the switch S1. In the embodiment shown in Fig. 1, all three phases are disconnected from the grid by means of S2 and correspondingly three individual impedances are connected between the power switching elements and the DC-link by means of the switch S1. In Figure 1 the impedances are connected to the positive terminal of the DC-link, the power switching elements of the grid converter GC connected to the positive and negative terminal of the DC-link, controlling the power dissipation in the corresponding impedances. An alternative connection possibility is shown in Figure 3, indicating the possibility of connecting the impedances in a star configuration, with the star point connected to the midpoint of the DC-link. Other possibilities are a delta configuration, a star configuration without any connection to the star point, etc., where these different configurations each have their own advantages, as well known for a man skilled in the art.

Figure 1 further shows an over voltage protection circuit OVP in the form of a controlled rectifier bridge short circuited by a resistor. This over voltage protection circuit OVP is brought into action, when the grid voltage is reduced at a high rate, leading to fast demagnetisation of the generator G which would, if this over voltage protection circuit OVP was not present, result in an over voltage on the DC-link being generated via the free-wheeling diodes of the rotor converter RC.

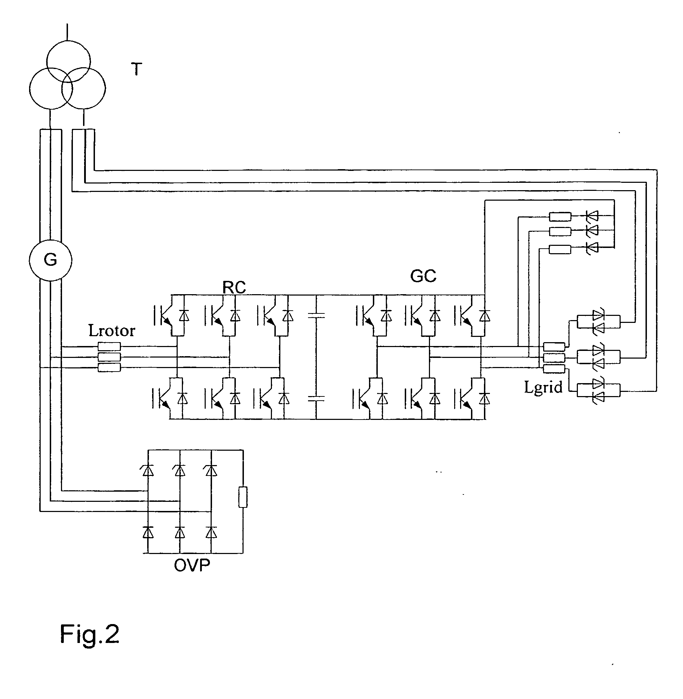

Figure 2 shows an alternative circuit arrangement in accordance with the present invention, in which the switches S1 and S2 in Figure 1 are substituted by power electronic switches, whereby the switching times for these switches can be reduced, leading to a faster reaction of the circuit arrangement.

During normal operation the wind turbine system is controlled to optimise generated power P, e.g. by controlling the pitch ϑ of the wind turbine wings, and the switching of the rotor converter RC and grid converter GC, respectively. At the occurrence of a grid fault, such as a short circuit, the grid voltage U_{g} detected will typically be reduced and if the DC over voltage is too high, the over voltage protection OVP is activated. After a reconfiguration of the grid converter GC by opening the switch S2 and closing the switch S1, the over voltage protection OVP - if triggered - can be disabled and the rotor converter RC can take over the control of the currents i in the rotor windings. The controlling of the currents i in the rotor windings provides the possibility of keeping the stator windings connected to the grid during a fault and providing a high short circuit current contribution during the fault. The initial short circuiting of the rotor windings by means of the over voltage protection circuit OVP provides a high short circuit contribution to the grid, helping to activate protection relays in the grid in order to clear the grid faults. In the following period until the grid fault has been cleared and the grid voltage U_{g} rises to rated voltage, the rotor converter RC controls the currents i in the rotor windings in order to increase the short circuit contribution from the wind turbine. This control is performed in such a way that the DC-voltage is controlled close to its rated voltage by setting the active power reference positive, when the speed of the generator G is above synchronous speed, and setting said reference negative, when said speed is below synchronous speed. Furthermore, the power reference is set in such a way, that possible oscillations in speed are dampened and over-speed conditions are avoided. During this control, the pitch ϑ is controlled in order to keep below maximum speed, i.e. avoiding over-speed conditions, but controlling the speed at a high speed above synchronous speed, which makes it possible to deliver active power P to the grid and charge the DC-link at the same time. Furthermore, the kinetic energy stored in the high rotational speed can be used to ramp up the power production fast after the grid has been restored. When a normal grid voltage U_{g} is detected, the rotor converter RC takes over the control of the DC-link voltage, while the grid converter GC is reconnected by disconnecting the switch S1 and connecting the switch S2, whereafter normal operation can be resumed.

As can be seen from the above, the present invention provides the possibility of avoiding disconnection of the stator windings from the grid and provides a high short circuit current during fault conditions. When the grid fault is removed and the grid voltage U_{g} is restored, the wind turbine is able to provide a controlled active/reactive power P,Q contribution for stabilising the grid, and large reactive power draw is avoided during reestablishment of the grid voltage. Furthermore, the present invention provides a soft and short response, when the grid fault is removed and the grid voltage U_{g} is restored, thus actively limiting the stress on the wind turbine and the grid, during restoration of the grid voltage U_{g}.

Due to the sudden removal of the electrical torque in connection with a grid fault, an over-speed condition for the turbine may arise due to the slow response of the pitch system to remove the torque input from the wind. Furthermore, oscillations in the transmission drive train can be initiated with the sudden torque change. In this respect, the rotor converter RC can be controlled to damp the mechanical oscillations and avoid over-speed conditions at speeds above synchronous speed. This can be achieved by increasing the active power P delivery to the grid during the fault, even though the grid voltage U_{g} is reduced. Active power transferred to the DC-link during this control method is dissipated in the grid resistors. When the grid fault is removed, a soft response is achieved by suitable control of the rotor converter RC. When the grid voltage U_{g} is restored, the generator G has to be remagnetised, and if the rise of the grid voltage U_{g} is very fast, the current i through the rotor converter RC will be correspondingly high. The rotor converter RC is not designed for these high currents and accordingly, the active switches in the rotor converter RC are switched off and the free wheeling diodes, which are able to handle high pulse-currents, conduct current i from the rotor windings to the DC-link, when the rotor voltages are higher than the actual DC-link voltage. In this way the currents i in the rotor and hence the electrical torque generation is limited. This situation corresponds to a situation, in which a high rotor resistance is inserted in the rotor, whereby the remagnetising time is actively reduced and the rotor currents i decay fast and the rotor converter RC can be activated to regain full control of active and reactive power P,Q. During the remagnetisation of the generator G, the DC-link will be charged, and the grid converter GC will dissipate the excessive energy in the resistors connected via the switch S1. Due to the fact that the resistors are used to dissipate the power instead of transferring the power back to the grid, the response time can be implemented very low and the active switches in the grid converter can fully be utilised to dissipate the maximum amount of energy delivered from the rotor. As soon as the rotor converter RC has regained the power control, the grid converter GC is reconnected to the grid by switching S1 off and S2 on. During this switching, the DC-link voltage is controlled by the rotor converter RC by actively altering the power reference according to the DC-link voltage level.

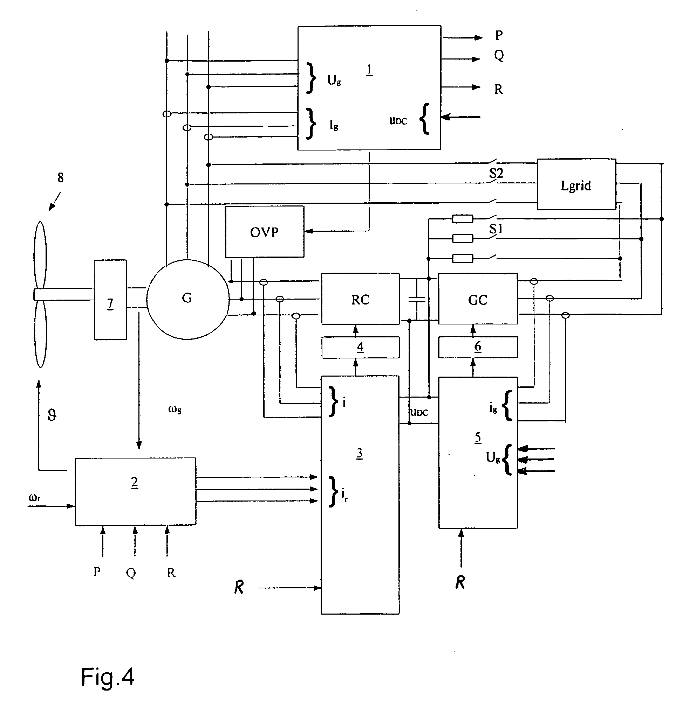

In Figure 4 is shown a more complete schematic diagram of the control system for the wind turbine, in which the different control units and measuring functions are indicated, said control units and measurings functions providing the possibility of performing the desired control in accordance with the present invention.

In the system shown in Figure 4, a grid-connected measuring and control unit 1 is connected to measure the grid voltages U_{g} and currents I_{g} in each phase of the grid, and to detect possible discontinuities in the voltages in order to initiate appropriate control in accordance with the present invention, when a grid fault situation is detected, and to resume normal operation, when the grid fault has been cleared, as detected by this measuring and control unit 1. The measuring and control unit 1 is also connected to control the overvoltage protection circuit OVP and the switches S1 and S2.

A power and speed controller 2 is connected to receive information regarding the grid status R and active and reactive power P,Q delivered to the grid, said information being delivered from the grid-connected measuring and control unit 1. Furthermore, the power and speed controller 2 is connected to receive a reference speed ωᵣ for the rotational speed of the generator G. In accordance with this received information, the power and speed controller 2 controls the pitch ϑ of the rotor blades and setting of current references iᵣ for the rotor converter controller 3.

The rotor converter controller 3 receives information regarding the rotor currents i and the rotor current references iᵣ and, based on this information, the rotor converter controller 3 delivers switching information to the drive circuit 4 for the rotor converter RC. Furthermore, the rotor converter controller 3 receives information regarding the DC voltage on the DC link in order to be able to control the DC voltage of the DC link during reconfiguration of the grid converter GC.

The grid converter controller 5 receives information regarding the grid voltages U_{g} and the currents delivered from the grid converter i_{g}, and based on this information and the DC link voltage, the grid converter controller 5 delivers switching information to the grid converter drive circuit 6 controlling the switches of the grid converter GC.

The connection between the rotor 8 of the wind turbine and the generator G is established through a gear mechanism 7, in order to convert the slow rotational speed of the wind turbine rotor 8 to the higher rotational speed of the generator G.

Above, the invention has been described in connection with preferred embodiments and several modifications can be envisaged by a man skilled in the art without departing from the following claims.

## Claims

1. Circuit arrangement in a grid-connected variable speed wind turbine system comprising
a double-fed induction generator (G) connected on the stator side to the grid and on the rotor side to a back-to-back converter connected for transferring energy between the rotor of the double-fed induction generator (G) and the grid, and
a controlled by-pass switch (OVP) acting directly on the rotor windings, c h a r-a c t e r i s e d by further comprising
means (S2) for disconnecting at least one normally grid-connected terminal of the back-to-back converter from the grid and means (S1) for connecting an impedance for allowing controlled power transfer from the intermediate DC circuit to said impedance, said control being performed by one or more power-switching elements of the normally grid-connected converter (GC), which has been disconnected from the grid.

2. Circuit arrangement in accordance with claim 1, **characterised by** said coupling means (S1, S2) comprising contactors.

3. Circuit arrangement in accordance with claim 1, **characterised by** said coupling means (S1, S2) comprising power electronic switches.

4. Circuit arrangement in accordance with any of the claims 1-3, **characterised by** comprising one impedance for each phase in the back-to-back converter, each impedance being connected to separate power-switching element(s) in the back-to-back converter.

5. Circuit arrangement in accordance with claim 4, **characterised by** said impedances being connected in a delta configuration.

6. Circuit arrangement in accordance with claim 4, **characterised by** said impedances being connected in a star configuration.

7. Circuit arrangement in accordance with claim 6, **characterised by** the midpoint of said star configuration being connected to a midpoint of the intermediate DC voltage.

8. Circuit arrangement in accordance with any of the preceding claims, **characterised by** said controlled bypass switch (OVP) comprising a controlled rectifier bridge.

9. Circuit arrangement in accordance with claim 8, **characterised by** said controlled by-pass switch (OVP) further comprising a short-circuit connected across the controlled rectifier bridge.

10. Circuit arrangement in accordance with claim 8, **characterised by** said controlled by-pass switch (OVP) further comprising at least one impedance connected across the controlled rectifier bridge.

11. Method of controlling a grid-connected variable speed wind turbine system comprising
a double-fed induction generator (G) and a back-to-back converter (RC, GC) connected for transferring energy between the rotor of the double-fed induction generator and the grid, and
a controlled by-pass switch (OVP) acting directly on the rotor windings, **characterised by** comprising the sequential steps of
a) detecting grid faults such as short circuits or low grid voltages,
b) in case of a DC over voltage, disabling the active switches in the rotor converter (RC) and activating the controlled by-pass switch (OVP) for short-circuiting the rotor of the dual-fed induction generator (G),
c) disconnecting at least one terminal of the normally grid-connected part of the back-to-back converter (GC) from the grid and connecting at least one resistor for providing a controlled power transfer from the intermediate DC-circuit of the back-to-back converter (RC, GC) to said resistor,
d) disabling the controlled by-pass switch (OVP),
e) controlling the rotor current (i) via the rotor converter (RC), dissipating the power transferred to the intermediate DC-circuit in the resistor, said controlled power dissipation being controlled by means of at least one power-switching element in the normally grid-connected part of the back-to-back converter (GC),
f) detecting the return of the grid voltage/clearance of the grid faults,
g) controlling the DC-link voltage by means of the rotor-connected part of the back-to-back converter (RC),
h) disconnecting of the resistor and re-connecting the normally grid-connected part of the back-to-back converter (GC) to the grid, and
i) resuming normal operation.

12. Method in accordance with claim 11, **characterised by** step e) further comprising
e1) if the grid voltage (U_{g}) is detected to be close to zero, short circuiting the rotor via the rotor converter (RC).

13. Method in accordance with claim 11 or 12, **characterised by** step e) further comprising
e2) performing switching in the back-to-back converter (RC, GC) to increase the reactive current from the generator only when the intermediate DC-voltage is close to the normal (rated) voltage.

14. Method in accordance with any of the claims 11-13, **characterised by** step e) further comprising
e3) controlling the rotor converter (RC) in order to increase the reactive (capacitive) short circuit contribution from the wind turbine.

15. Method in accordance with any of the claims 11-14, **characterised by** step e) further comprising
e4) controlling the DC-voltage by setting the active power reference positive, when the speed of the generator (G) is above synchronous speed, and negative, when said speed is below synchronous speed.

16. Method in accordance with any of the claims 11-15, **characterised by** step e) further comprising
e5) setting the power reference in such a way as to damp oscillations in speed and avoid over-speed conditions.

17. Method in accordance with any of the claims 11-16, **characterised by** step e) further comprising
e6) controlling the pitch (3) of the wind turbine in such a way as to obtain a controlled speed at a high level, above synchronous speed, making it possible to deliver active power to the grid and maintain a stable DC-link voltage.

18. Method in accordance with claim 17, **characterised by** step g) further comprising
g1) using the stored kinetic energy to ramp up the power production fast after the grid has been restored.

19. Control system for a wind turbine comprising a circuit arrangement in accordance with claim 1, **characterised by** said control system comprising a grid-connected measuring and control unit (1) for detecting grid faults and initiating disconnection of the normally grid-connected grid converter (GC) and connecting an impedance for allowing controlled power transfer from the intermediate DC circuit to the impedance and initiating appropriate corresponding control of the power switching element of the normally grid-connected grid converter (GC).

20. Control system in accordance with claim 19, **characterised by** the grid-connected measuring and control unit (1) being adapted to measure voltages (U_{g}) in the grid and currents (I_{g}) delivered to the grid from the wind turbine system.

21. Control system in accordance with claim 19 or 20, **characterised by** the grid-connected measuring and control unit (1) further being connected to control the activation and deactivation of an over-voltage protection circuit (OVP).

22. Control system in accordance with any of the claims 19-21, **characterised by** the grid-connected measuring and control unit (1) further being connected to control a power and speed controller (2), in order to provide the desired voltages (U_{g}), currents (I_{g}), active power (P) and reactive power (Q) during normal as well as during fault conditions.

23. Control system in accordance with any of the preceding claims 19-22, **characterised by** the grid-connected measuring and control unit (1) further being connected to control the status for a rotor converter controller (3) controlling the rotor converter (RC) via a rotor converter drive circuit (4).

24. Control system in accordance with any of the preceding claims 19-23, **characterised by** the grid-connected measuring and control unit (1) further being connected to control the status for a grid converter controller (5) controlling the grid converter (GC) via a grid converter drive circuit (6).

## Patentansprüche

1. Schaltungsanordnung in einem drehzahlvariablen Windturbinensystem mit Netzanbindung, die
über einen doppelt gespeisten Asynchrongenerator (G), der auf der Statorseite mit dem Netz verbunden und auf der Rotorseite mit einem antiparallel geschalteten Konverter verbunden ist, um Energie zwischen dem Rotor des doppelt gespeisten Asynchrongenerators (G) und dem Netz zu übertragen, und
über einen gesteuerten Bypass-Schalter (OVP) verfügt, der direkt auf die Rotorwicklungen einwirkt, **dadurch gekennzeichnet,**
**dass** sie weiterhin
über Mittel (S2) zum Trennen wenigstens eines normalerweise mit dem Netz verbundenen Anschlusses des antiparallel geschalteten Konverters von dem Netz und Mittel (S1) zum Verbinden einer Impedanz verfügt, um eine gesteuerte Energieübertragung von der dazwischenliegenden Gleichstromschaltung zu der Impedanz zu gestatten, wobei die Steuerung durch ein oder mehrere Energieschaltelemente des normalerweise mit dem Netz verbundenen Konverters (GC) durchgeführt ist, der von dem Netz getrennt ist.

2. Schaltungsanordnung nach Anspruch 1, **dadurch gekennzeichnet, dass** die Verbindungsmittel (S1, S2) Kontaktgeber aufweisen.

3. Schaltungsanordnung nach Anspruch 1, **dadurch gekennzeichnet, dass** die Verbindungsmittel (S1, S2) energieelektronische Schalter aufweisen.

4. Schaltungsanordnung nach einem der Ansprüche 1-3, **dadurch gekennzeichnet, dass** sie eine Impedanz für jede Phase in dem antiparallel geschalteten Konverter aufweist, wobei jede Impedanz mit (einem) getrennten Energieschaltelement(en) in dem antiparallel geschalteten Konverter verbunden ist.

5. Schaltungsanordnung nach Anspruch 4, **dadurch gekennzeichnet, dass** die Impedanzen in einer Deltaanordnung verbunden sind.

6. Schaltungsanordnung nach Anspruch 4, **dadurch gekennzeichnet, dass** die Impedanzen in einer Sternanordnung verbunden sind.

7. Schaltungsanordnung nach Anspruch 6, **dadurch gekennzeichnet, dass** der Mittelpunkt der Sternanordnung mit einem Mittelpunkt der dazwischenliegenden Gleichspannung verbunden ist.

8. Schaltungsanordnung nach einem der vorangehenden Ansprüche, **dadurch gekennzeichnet, dass** der gesteuerte Bypass-Schalter (OVP) eine gesteuerte Gleichrichterbrücke aufweist.

9. Schaltungsanordnung nach Anspruch 8, **dadurch gekennzeichnet, dass** der gesteuerte Bypass-Schalter (OVP) weiterhin eine Strombrücke aufweist, die durch die gesteuerte Gleichrichterbrücke verbunden ist.

10. Schaltungsanordnung nach Anspruch 8, **dadurch gekennzeichnet, dass** der gesteuerte Bypass-Schalter (OVP) weiterhin wenigstens eine Impedanz aufweist, die durch die gesteuerte Gleichrichterbrücke verbunden ist.

11. Verfahren zum Steuern eines drehzahlvariablen Windturbinensystems mit Netzanbindung, das
einen doppelt gespeisten Asynchrongenerator (G) und einen antiparallel geschalteten Konverter (RC, GC), die für das Übertragen von Energie zwischen dem Rotor des doppelt gespeisten Asynchrongenerators und dem Netz verbunden sind, und
einen gesteuerten Bypass-Schalter (OVP) aufweist, der direkt auf die Rotorwicklungen einwirkt, **dadurch gekennzeichnet, dass** es die aufeinanderfolgenden Schritte
a) Detektieren von Netzfehlern wie Kurzschlüsse oder niedrige Netzspannungen,
b) im Falle einer Gleichstromüberspannung Abschalten der aktiven Schalter in dem Rotorkonverter (RC) und Aktivieren des gesteuerten Bypass-Schalters (OVP) zum Kurzschließen des Rotors des doppelt gespeisten Asynchrongenerators (G),
c) Trennen wenigstens eines Anschlusses des normalerweise mit dem Netz verbundenen Teils des antiparallel geschalteten Konverters (GC) von dem Netz und Verbinden wenigstens eines Widerstands zum Bereitstellen einer gesteuerten Energieübertragung von der dazwischenliegenden Gleichstromschaltung des antiparallel geschalteten Konverters (RC, GC) zu dem Widerstand,
d) Abschalten des gesteuerten Bypass-Schalters (OVP),
e) Steuern des Rotorstroms (i) über den Rotorkonverter (RC), wobei die an die dazwischenliegende Gleichstromschaltung übertragene Energie in dem Widerstand abgeführt wird, wobei die gesteuerte Energieabführung durch wenigstens ein Energieschaltelement in dem normalerweise mit dem Netz verbundenen Teil des antiparallel geschalteten Konverters (GC) gesteuert wird,
f) Detektieren des Wiederanliegens der Netzspannung/des Behebens der Netzfehler,
g) Steuern der Gleichstrombrückenspannung durch den mit dem Rotor verbundenen Teil des antiparallel geschalteten Konverters (RC),
h) Trennen des Widerstands und Wiederverbinden des normalerweise mit dem Netz verbundenen Teils des antiparallel geschalteten Konverters (GC) mit dem Netz und
i) Wiederaufnehmen des normalen Betriebs aufweist.

12. Verfahren nach Anspruch 11, **dadurch gekennzeichnet, dass** Schritt e) weiterhin
e1) wenn die Netzspannung (Ug) nahe bei Null detektiert wird, Kurzschließen des Rotors über den Rotorkonverter (RC) aufweist.

13. Verfahren nach Anspruch 11 oder 12, **dadurch gekennzeichnet, dass** Schritt e) weiterhin
e2) Durchführen einer Schaltung in dem antiparallel geschalteten Konverter (RC, GC) aufweist, um den Blindstrom von dem Generator nur zu erhöhen, wenn die dazwischenliegende Gleichspannung nahe bei der normalen (Nenn-) Spannung liegt.

14. Verfahren nach einem der Ansprüche 11-13, **dadurch gekennzeichnet, dass** Schritt e) weiterhin
e3) Steuern der Rotorkonverters (RC) aufweist, um den Blind-(kapazitiven) Kurzschlussbeitrag von der Windturbine zu erhöhen.

15. Verfahren nach einem der Ansprüche 11-14, **dadurch gekennzeichnet, dass** Schritt e) weiterhin
e4) Steuern der Gleichspannung durch Setzen einer positiven Wirkleistungsreferenz, wenn die Geschwindigkeit des Generators (G) über der Synchrongeschwindigkeit liegt, und einer negativen, wenn die Geschwindigkeit unter der Synchrongeschwindigkeit liegt, aufweist.

16. Verfahren nach einem der Ansprüche 11-15, **dadurch gekennzeichnet, dass** Schritt e) weiterhin
e5) Setzen der Leistungsreferenz derart, dass Schwankungen in der Geschwindigkeit gedämpft und Überdrehzahlbedingungen vermieden werden, aufweist.

17. Verfahren nach einem der Ansprüche 11-16, **dadurch gekennzeichnet, dass** Schritt e) weiterhin
e6) Steuern der Anstellung (ϑ) der Windturbine derart, dass eine gesteuerte Geschwindigkeit auf einem hohen Niveau über der Synchrongeschwindigkeit erreicht wird, aufweist, wodurch es möglich wird, eine Wirkleistung an das Netz abzugeben und eine stabile Gleichstrombrückenspannung zu halten.

18. Verfahren nach Anspruch 17, **dadurch gekennzeichnet, dass** Schritt g) weiterhin
g1) Verwenden der gespeicherten kinetischen Energie zum schnellen Beschleunigen der Energieproduktion aufweist, nachdem das Netz wiederhergestellt ist.

19. Steuersystem für eine Windturbine mit einer Schaltungsanordnung nach Anspruch 1, **dadurch gekennzeichnet, dass** das Steuersystem eine mit dem Netz verbundene Mess- und Steuereinheit (1) zum Detektieren von Netzfehlern und zum Einleiten eines Trennens des normalerweise mit dem Netz verbundenen Netzkonverters (GC) sowie zum Verbinden einer Impedanz aufweist, um eine gesteuerte Energieübertragung von der dazwischenliegenden Gleichstromschaltung zu der Impedanz zu gestatten und eine angemessene entsprechende Steuerung des Energieschaltelements des normalerweise mit dem Netz verbundenen Netzkonverter (GC) einzuleiten.

20. Steuersystem nach Anspruch 19, **dadurch gekennzeichnet, dass** die mit dem Netz verbundene Mess- und Steuereinheit (1) dazu eingerichtet ist, Spannungen (Ug) in dem Netz und von dem Windturbinensystem an das Netz abgegebene Ströme (I_{g}) zu messen.

21. Steuersystem nach Anspruch 19 oder 20, **dadurch gekennzeichnet, dass** die mit dem Netz verbundene Mess- und Steuereinheit (1) weiterhin verbunden ist, um die Aktivierung und Deaktivierung einer Überspannungsschutzschaltung (OVP) zu steuern.

22. Steuersystem nach einem der Ansprüche 19-21, **dadurch gekennzeichnet, dass** die mit dem Netz verbundene Mess- und Steuereinheit (1) weiterhin verbunden ist, um eine Energie- und Geschwindigkeitssteuerung (2) zu steuern, um die gewünschte(n) Spannungen (Ug), Ströme (I_{g}), Wirkleistung (P) und Blindleistung (Q) während normalen sowie während fehlerhaften Bedingungen bereitzustellen.

23. Steuersystem nach einem der vorangehenden Ansprüche 19-22, **dadurch gekennzeichnet, dass** die mit dem Netz verbundene Mess- und Steuereinheit (1) weiterhin verbunden ist, um den Status für eine Rotorkonvertersteuerung (3) zu kontrollieren, die den Rotorkonverter (RC) über eine Rotorkonverterantriebsschaltung (4) steuert.

24. Steuersystem nach einem der vorangehenden Ansprüche 19-23, **dadurch gekennzeichnet, dass** die mit dem Netz verbundene Mess- und Steuereinheit (1) weiterhin verbunden ist, um den Status für eine Netzkonvertersteuerung (5) zu kontrollieren, die den Netzkonverter (GC) über eine Netzkonverterantriebsschaltung (6) steuert.

## Revendications

1. Circuit agencé pour système d'éolienne à vitesse variable connecté au réseau et comprenant
un générateur à induction à double alimentation (G) connecté du côté du stator au réseau et du côté du rotor à un convertisseur réversible connecté pour transférer l'énergie entre le rotor du générateur à induction à double alimentation (G) et le réseau, et un commutateur by-pass contrôlé (OVP) agissant directement sur les enroulements du rotor, **caractérisé par** le fait de comprendre en outre des moyens (S2) pour la déconnexion d'au moins un terminal normalement connecté au réseau du convertisseur réversible à partir du réseau et des moyens (S1) pour la connexion d'une impédance afin de permettre le transfert contrôlé d'énergie depuis le circuit DC intermédiaire à ladite impédance, ledit contrôle étant exécuté par un ou plusieurs éléments de commutation de puissance du convertisseur normalement connectés au réseau (GC) qui a été déconnecté du réseau.

2. Circuit agencé selon la revendication 1, **caractérisé en ce que** lesdits moyens d'accouplement (S1 S2) comprennent des contacteurs.

3. Circuit agencé selon la revendication 1, **caractérisé en ce que** lesdits moyens d'accouplement (S 1 S2) comprennent des commutateurs électroniques de puissance.

4. Circuit agencé selon l'une quelconque des revendications 1 à 3, **caractérisé en ce qu'**il comprend une impédance pour chaque phase dans le convertisseur réversible, chaque impédance étant connectée à (aux) l'élément(s) de commutation de puissance séparé(s) dans le convertisseur réversible.

5. Circuit agencé selon la revendication 4, **caractérisé par** lesdites impédances connectées en configuration triangle.

6. Circuit agencé selon la revendication 4, **caractérisé par** lesdites impédances connectées en une configuration en étoile.

7. Circuit agencé selon la revendication 6, **caractérisé en ce que** le point milieu de ladite configuration en étoile est relié au point milieu de la tension DC intermédiaire.

8. Circuit agencé selon l'une quelconque des revendications antérieures, **caractérisé en ce que** ledit commutateur by-pass contrôlé (OVP) comprend un pont redresseur contrôlé.

9. Circuit agencé selon la revendication 8, **caractérisé en ce que** ledit commutateur by-pass contrôlé (OVP) comprend en outre un court-circuit connecté à travers le pont redresseur contrôlé.

10. Circuit agencé selon la revendication 8, **caractérisé en ce que** ledit commutateur by-pass contrôlé (OVP) comprend en outre au moins une impédance connectée à travers le pont redresseur contrôlé.

11. Procédé de contrôle d'un système d'éolienne à vitesse variable connecté au réseau et comprenant
un générateur d'induction à double alimentation (G) et un convertisseur réversible (RC, GC) connecté pour transférer l'énergie entre le rotor du générateur à induction à double alimentation et le réseau, et un commutateur by-pass contrôlé (OVP) agissant directement sur les enroulements de rotor, **caractérisé par** les étapes séquentielles de
a) détection des défaillances du réseau, comme des courts-circuits ou des basses tensions du réseau,
b) en cas de surtension DC, désactivation des commutateurs actifs dans le convertisseur de rotor (RC) et activation du commutateur by-pass contrôlé (OVP) afin de court-circuiter le rotor du générateur à induction à double alimentation (G);
c) déconnexion d'au moins un terminal de la partie normalement connectée au réseau du convertisseur réversible (GC) à partir du réseau et connexion d'au moins une résistance pour fournir un transfert de puissance contrôlé à partir du circuit DC intermédiaire du convertisseur réversible (RC, GC) à ladite résistance,
d) désactivation du commutateur by-pass contrôlé (OVP).
e) contrôle du courant rotor (i) à travers le convertisseur de rotor (RC), dissipation de la puissance transférée au circuit DC intermédiaire dans la résistance, ladite dissipation de puissance contrôlée étant contrôlée par au moins un élément de commutation de puissance dans la partie normalement connectée au réseau du convertisseur réversible (GC),
f) détection du retour de tension de réseau/du jeu de défaillances du réseau,
g) contrôle de la tension de lien DC au moyen de la partie connectée au réseau du convertisseur réversible (RC);
h) déconnexion de la résistance et reconnexion de la partie normalement connectée du réseau du convertisseur réversible (GC) au réseau, et
i) résumé de l'opération normale.

12. Procédé selon la revendication 11, **caractérisé par** l'étape e) comprenant en outre e1) en cas de détection de la tension de réseau (U_{g}) proche de zéro, le court-circuit du rotor à travers le convertisseur de rotor (RC).

13. Procédé selon la revendication 11 ou 12, **caractérisé par** l'étape e) comprenant en outre
e2) l'exécution de la commutation dans le convertisseur réversible (RC, GC) afin d'augmenter le courant réactif du générateur uniquement lorsque la tension DC intermédiaire se rapproche de la tension normale (assignée).

14. Procédé selon l'une quelconque des revendications 11 à 13, **caractérisé par** l'étape e) comprenant en outre
e3) le contrôle du convertisseur de rotor (RC) afin d'augmenter la contribution au court-circuit réactif (capacitif) de l'éolienne.

15. Procédé selon l'une quelconque des revendications 11 à 14, **caractérisé par** l'étape e) comprenant en outre
e4) le contrôle de la tension DC en établissant la référence de puissance active positive, lorsque la vitesse du générateur (G) est supérieure à la vitesse synchrone, et négative lorsque ladite vitesse est inférieure à la vitesse synchrone.

16. Procédé selon l'une quelconque des revendications 11 à 15, **caractérisé par** l'étape e) comprenant en outre
e5) l'établissement de la référence de puissance de sorte à amortir les oscillations en vitesse et à éviter les conditions de survitesse.

17. Procédé selon l'une quelconque des revendications 11 à 16, **caractérisé par** l'étape e) comprenant en outre
e6) le contrôle de l'angle (9) de l'éolienne de manière à obtenir une vitesse contrôlée à un niveau élevé, supérieur à la vitesse synchrone, permettant de fournir une puissance active au réseau et de maintenir une tension de lien DC stable.

18. Procédé selon la revendication 17, **caractérisé par** l'étape g) comprenant en outre g1) l'utilisation de l'énergie cinétique stockée pour accélérer la production de puissance une fois le réseau restauré.

19. Système de contrôle pour éolienne comprenant un circuit agencé selon la revendication 1, **caractérisé en ce que** ledit système de contrôle comprend une unité de contrôle et de mesure connectée au réseau (1) pour détecter des défaillances de réseau et initier la déconnection du convertisseur de réseau normalement connecté au réseau (GC) et la connexion d'une impédance afin de permettre le transfert de puissance contrôlé depuis le circuit DC intermédiaire à l'impédance et d'initier le contrôle correspondant approprié de l'élément de commutation de puissance du convertisseur de réseau normalement connecté au réseau (GC).

20. Système de contrôle selon la revendication 19, **caractérisé en ce que** l'unité de contrôle et de mesure connectée au réseau (1) est adaptée pour mesurer les tensions (Ug) dans le réseau et les courants (I_{g}) fournis au réseau à partir du système d'éolienne.

21. Système de contrôle selon la revendication 19 ou 20, **caractérisé en ce que** l'unité de contrôle et de mesure connectée au réseau (1) est en outre connectée pour contrôler l'activation et la désactivation d'un circuit de protection contre les surtensions (OVP).

22. Système de contrôle selon l'une quelconque des revendications 19 à 21, **caractérisé en ce que** l'unité de contrôle et de mesure connectée au réseau (1) est connectée en outre pour contrôler un contrôleur de puissance et de vitesse (2), afin de fournir les courants (I_{g}) de tensions (Ug), la puissance active (P) et la puissance réactive (Q), désirés en conditions normales de même qu'en conditions de défaillance.

23. Système de contrôle selon l'une quelconque des revendications précédentes 19 à 22, **caractérisé en ce que** l'unité de contrôle et de mesure connectée au réseau (1) est connectée en outre pour contrôler le statut d'un contrôleur de convertisseur de rotor (3) contrôlant le convertisseur de rotor (RC) à travers un circuit d'entraînement du convertisseur de rotor (4).

24. Système de contrôle selon l'une quelconque des revendications précédentes 19 à 23, **caractérisé en ce que** l'unité de contrôle et de mesure connectée au réseau (1) est en outre connectée pour contrôler le statut d'un contrôleur de convertisseur de réseau (5) contrôlant le convertisseur de réseau (GC) à travers un circuit d'entraînement du convertisseur de réseau (6).
